# EUROPÄISCHE PATENTSCHRIFT

(11) **EP 0 391 016 B1**
(45) Veröffentlichungstag und Bekanntmachung des Hinweises auf die Patenterteilung: **27.10.1993**
(21) Anmeldenummer: 89890098.0
(22) Anmeldetag: 07.04.1989
(51) Int. Cl.: A01K 1/03, A01K 1/035

(54) **Käfigkonstruktion zur Haltung von Schimpansen**
Cage construction for keeping chimpanzees
Construction de cage pour détenter des chimpanzés

(43) Veröffentlichungstag der Anmeldung: 10.10.1990
(73) Patentinhaber: IMMUNO Aktiengesellschaft, A-1221 Wien (AT)
(72) Erfinder: Eder, Gerald Dr.,, A-3031 Rekawinkel (AT); Womastek, Karl Dipl.-Ing.,, A-1160 Wien (AT); Reiländer, Josef, A-1030 Wien (AT); Simonich, Walter, A-1232 Wien (AT)
(74) Vertreter: Wolfram, Gustav, Dipl.-Ing.

(56) Entgegenhaltungen:
- WO-A-87/01966
- CH-A- 434 858
- FR-A- 715 950
- US-A- 3 177 848
- US-A- 3 399 654
- US-A- 3 731 657
- US-A- 3 760 768
- US-A- 4 736 709

## Beschreibung

Die Erfindung betrifft eine Käfigkonstruktion für Schimpansen, mit einem aus Stäben oder Rohren gebildeten Boden von rechteckigem Grundriß, den Boden umgebenden Seitenwänden, einer Vorderwand, einer Rückwand und einer Decke, wobei die Rückwand gegen die Vorderwand und retour bewegbar ist.

Bekannte Käfige dieser Art (US-A - 3,760,768, US-A - 3,399,654) für Primaten sind zur Gänze aus Edelstahl- oder verzinkten Eisenrohren bzw. -gittern gefertigt. Sie weisen konstruktions- und fertigungstechnisch bedingt eine maximale Größe von etwa 3,5 m² auf, da die Dimensionen der Rohre bzw. Gitter nach oben begrenzt sind.

Diese bekannten Käfige haben weiters den Nachteil einer sehr großen Lärmentwicklung infolge der Herstellung zur Gänze aus Metall. Bei Gitterkäfigen besteht zudem die Gefahr der Bildung von Schmutzinseln an den Kreuzungsstellen der Gitterstäbe.

Zum Zwecke der Immobilisierung des Primaten bei medizinischen Applikationen oder für ein Hinüberwechseln des Tieres in einen Andock-Käfig ist eine Seitenwand gegenüber der gegenüberliegenden beweglich angeordnet und kann zu dieser mittels einer mechanischen Vorrichtung, wie einer Kette oder Gewindespindel, manuell oder mittels Elektromotor oder hydraulisch bewegt werden. Die Antriebseinrichtung ist hierbei einer Verschmutzung durch Exkremente des Primaten ausgesetzt.

Die Erfindung stellt sich die Aufgabe, eine Käfigkonstruktion der eingangs beschriebenen Art zu schaffen, die in für eine Haltung von Schimpansen ausreichender Größe mit geringem Aufwand herstellbar ist und die trotz ihrer Größe nur eine geringe Lärmentwicklung aufweist und deren mechanische Einrichtungen gut geschützt unterbringbar sind.

Diese Aufgabe wird erfindungsgemäß dadurch gelöst, daß zur Haltung von Schimpansen in der biomedizinischen Forschung nur die Vorderwand aus Stäben bzw. Rohren gebildet ist, wogegen die übrigen Seitenwände und die Decke sowie die bewegbare Rückwand aus Beton oder Mauerwerk mit innen geglätteter Oberfläche bestehen, und daß mindestens eine Seitenwand und die Decke aus Panzerglas gebildete Sichtscheiben aufweisen.

Die Betonwände bzw. Wände aus Mauerwerk weisen den Vorteil auf, daß für die Schimpansen Privatsphäre geschaffen wird, so daß er sich an einen von einem Nachbarkäfig nicht einschaubaren Platz zurückziehen kann. Die Betonwände können weiten eingefärbt werden, was bei den bekannten, ausschließlich aus Metall gefertigten Käfigen nicht möglich ist. Die Mauerwerkswände können innenseitig mit einem Nirostablech oder mit geschliffenen oder polierten Natur- bzw. Kunststoffplatten belegt sein.

Die Sichtscheiben ermöglichen einerseits dem Schimpansen, aus dem Käfig zu schauen, und andererseits eine ungestörte und den Schimpansen nicht störende Beobachtung mittels einer Fernsehkamera. Es kann auch eine zusätzliche Beleuchtung angebracht werden, und es ist möglich, Grünpflanzen, die in der biomedizinischen Einheit nicht zugelassen wären, vorzusehen, die vom Schimpansen beobachtet werden können.

Auch besteht die Möglichkeit, in den Betonwänden bzw. Mauerwerkswänden Empfangsantennen derart einzugießen, daß eine telemetrische Datenerfassung von jedem Platz aus möglich ist. Hierdurch ist eine Kontrolle des Schimpansen bei Nacht ohne Rundgang eines Nachtwächters und damit ohne Störung des Tieres im Schlaf möglich.

Die aus Beton bzw. Mauerwerk gefertigte Rückwand, die gegebenenfalls ebenfalls eine Sichtscheibe aufweisen kann, ermöglicht die völlig geschützte Anordnung des Antriebsmechanismus für die Rückwand, wodurch eine große Betriebssicherheit erzielbar ist.

Um eine Demontage der Sichtscheiben durch den Schimpansen zu verhindern, ist zweckmäßig die Innenfläche der Sichtscheiben bündig mit der Innenfläche der Seitenwände bzw. der Decke.

Zur Vermeidung einer Reinfektion des Schimpansen von Parasiten durch Exkremente weisen zweckmäßig die unbeweglichen Seitenwände Steher auf, die sich am Fundament abstützen und in einem vorbestimmten Abstand vom Fundament den Boden abstützende Längskonsolen besitzen, die Führungsschienen für die Rückwand bilden.

Vorzugsweise sind die Steher und Längskonsolen einstückig mit den Seitenwänden ausgebildet, wobei zweckmäßig die Rückwand mittels Rollen oder Räder auf den Längskonsolen gelagert ist.

Gemäß einer bevorzugten Ausführungsform sind die Rollen bzw. Räder angetrieben, wobei der Antriebsmechanismus außenseitig der Rückwand angeordnet ist.

Der erfindungsgemäße Käfig kann ohne besonderen Aufwand in beliebiger Größe hergestellt werden. Vorzugsweise entspricht die lichte Höhe des Käfigs etwa der zweifachen Körperlänge eines Schimpansen und die Grundfläche des Käfigs etwa dem Quadrat der zweifachen Körperlänge.

Um den gesamten Käfig von oben gut überblicken zu können, ist vorteilhaft die Sichtscheibe der Decke etwa mittig angeordnet und beträgt ihre Fläche etwa 1/5 der Fläche der Decke.

Zur Sicherstellung einer Privatsphäre für den Schimpansen ist zweckmäßig die Sichtscheibe der Seitenwand außermittig und oberhalb der Sitzhöhe eines Schimpansen angeordnet.

Vorteilhaft beträgt die Fläche der Sichtscheiben 1/15 bis 1/10 der jeweiligen Seitenwände.

Um eine Reinfektion des Schimpansen durch Exkremente zu vermeiden, ist zweckmäßig unterhalb der Längskonsolen eine längs des Bodens bewegbare Reinigungsvorrichtung zur Reinigung des Fundamentes angeordnet. Hierbei ermöglichen die Längskonsolen eine besonders gut geschützte Anordnung des Antriebsmechanismus für die Reinigungsvorrichtung.

Die Reinigungsvorrichtung selbst weist nach einer bevorzugten Ausführungsform ein sich quer über die Grundfläche des Käfigs erstreckendes, am Fundament streifendes Reinigungsschild auf, das von der Rückwand bis zur Vorderwand und retour bewegbar ist, wobei zweckmäßig das Reinigungsschild an zwei entlang unterhalb der Längskonsolen und im Abstand vom Fundament angeordneten Schraubspindeln geführten Muttern gelenkig befestigt ist.

Um einen Zutritt eines Wärters in den Käfig zwecks Reinigung und Pflege etc. zu ermöglichen, ist nach einer bevorzugten Ausführungsform in der Rückwand eine nur von außen ver- und entriegelbare Türe angeordnet. Die Türe der Rückwand ist ähnlich einer Schutzraumtüre ausgebildet und sie besteht im wesentlichen aus dem Material, ausdem die Rückwand gefertigt ist. Die in der Rückwand vorgesehene Sichtscheibe kann in der Türe angeordnet sein.

Zum Zweck der Behandlung des Schimpansen ist vorteilhaft an eine an der Vorderwand angeordnete, durch eine Schiebetüre verschließbare Öffnung ein erkerartiger Käfig andockbar.

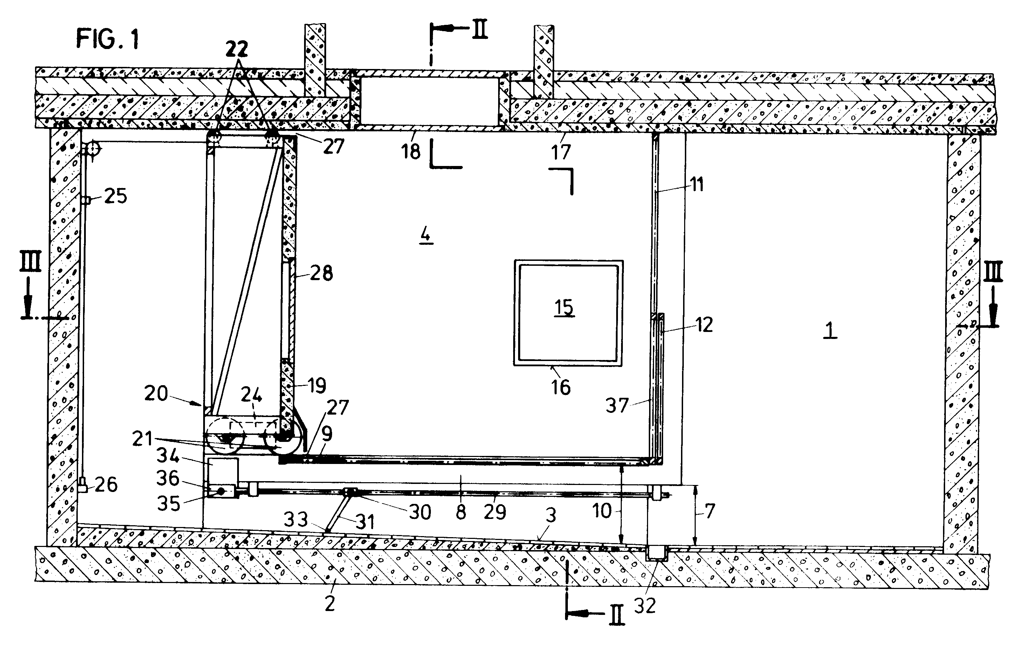

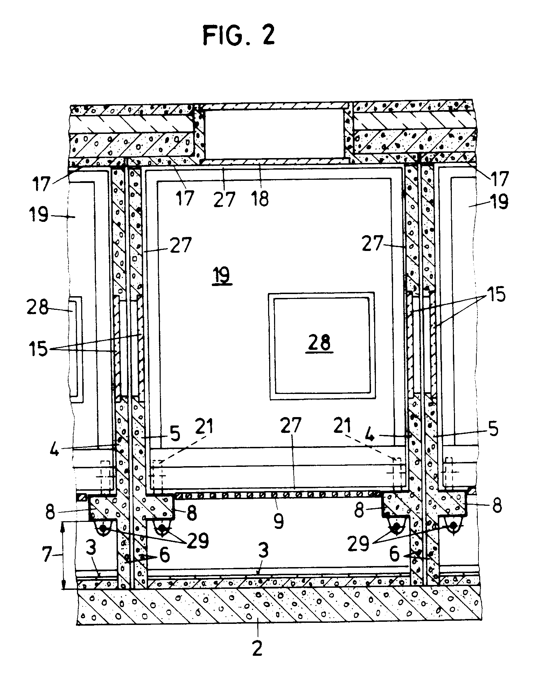

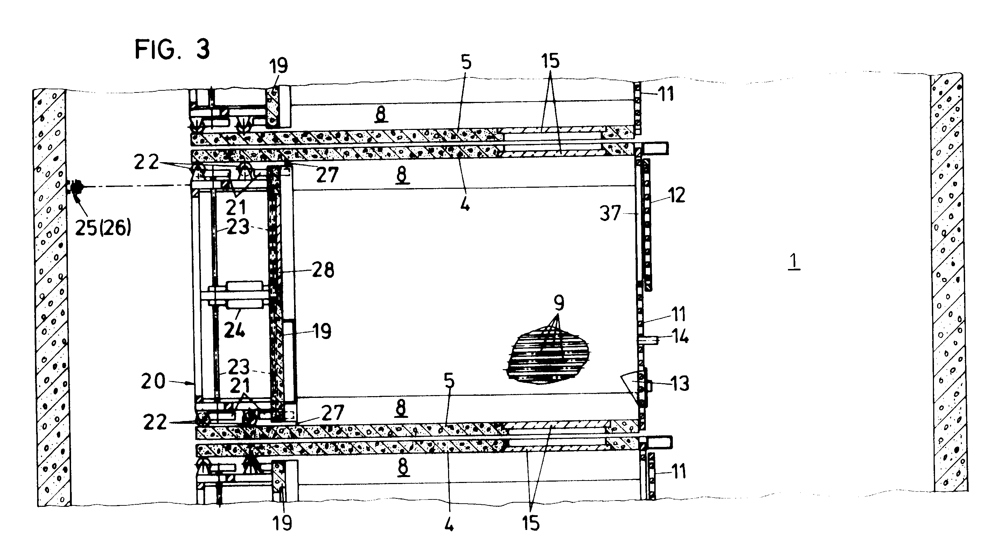

Die Erfindung ist nachfolgend anhand der Zeichnung an einem Ausführungsbeispiel näher erläutert, wobei Fig. 1 einen Längsschnitt durch eine Käfigkonstruktion, Fig. 2 einen Schnitt quer hierzu gemäß der Linie II-II der Fig. 1 und Fig. 3 einen Schnitt gemäß der Linie III-III der Fig. 1 zeigen.

Die Käfigkonstruktion ist in einem Raum 1 eines Gebäudes angeordnet, wobei vorzugsweise mehrere Käfige nebeneinander gereiht eine sich in Längsrichtung des Raumes 1 erstreckende Käfigreihe bilden. Der Fundamentboden 2 des Raumes 1 weist unterhalb der Käfige eine mit etwa 3 % geneigte Fläche 3 auf, wodurch, wie später noch erläutert wird, die Reinigung wesentlich erleichtert wird.

Jeder Käfig weist einen rechteckigen Grundriß auf, wobei benachbarte Käfige mit den Längs-Seitenwänden 4,5 nebeneinander zu liegen kommen. Die Längs-Seitenwände 4,5 des Käfigs werden von Betonwänden gebildet, die jeweils mit Stehern 6 am Fundamentboden 2 ruhen und in einem vorbestimmten Abstand 7 oberhalb des Fundamentbodens 2 horizontal verlaufende, in das Käfiginnere ragende Längskonsolen 8 besitzen. Die Steher 6, Längskonsolen 8 und Längs-Seitenwände 4 bzw. 5 sind integral aus Beton ausgebildet. Auf den Längskonsolen 8 ruht ein Käfigboden 9, der von Stäben oder Rohren aus rostfreiem Metall, die in einem Profilrohrrahmen eingeschweißt sind, gebildet und mit den Längskonsolen 8 verschraubt ist. Die Höhe 10 des Bodens 9 über der geneigten Fläche 3 beträgt etwa (im Mittel) 70 cm.

Die Vorderwand 11 des Käfigs ist ebenfalls von Stäben bzw. Rohren rostfreien Materials, die in einem an den Längs-Seitenwänden 4,5 befestigten Profilrohrrahmen eingeschweißt sind, gebildet. Sie weist eine vertikale Schiebegittertüre 12 auf, die in oberer und unterer Position fixierbar ist und zwecks leichteren Bewegens mit einem nicht näher dargestellten Gewichtsausgleich, der von einem über Umlenkrollen gelenkten Seilzug und einem Gegengewicht gebildet ist, versehen ist.

An der Vorderwand 11 sind weiters ein ausschwenkbarer Futterbehälter 13, der in beiden Endstellungen arretiert werden kann, sowie eine Halterung 14 für eine Trinkflasche angeordnet. Weiters kann auch ein Futterautomat, für kreatives Füttern, wie z.B. ein Popcorn-Automat, zur selbständigen Entnahme vorgesehen sein. Auch lassen sich hier diverse Geschicklichkeitsspiele oder ein Joy-Stick anordnen, mit dem sich das Tier in kreativer Weise die Beleuchtungsstärke, Beleuchtungsfarbe, ein Radioprogramm bzw. die Lautstärke selbst wählen kann.

Die Längs-Seitenwände 4,5 weisen Sichtscheiben 15 aus Panzerglas auf, deren Innenfläche bündig mit der Innenfläche des Betons abschließen. Die Unterkante 16 der Sichtscheiben ist etwa 70 cm über dem Boden 9 des Käfigs angeordnet. Die Größe der Sichtscheiben liegt bei etwa einem halben Quadratmeter.

Die Decke 17 der Käfigkonstruktion ist aus Beton gefertigt und trägt ebenfalls eine Sichtscheibe 18 aus Panzerglas. Diese Sichtscheibe 18 liegt etwa mittig der Decke 17 und ist etwa 1 m² groß. Sie ermöglicht eine Beobachtung nahezu des gesamten Käfiginnenraumes.

Die der Vorderwand gegenüberliegende, ebenfalls aus Beton gefertigte Rückwand 19 ist an einem Wagen 20 angeordnet, der mittels Räder bzw. Rollen 21 entlang der Längskonsolen 8 verfahrbar ist. Der als Stahlkonstruktion ausgebildete Wagen 20 weist, um ein Verkanten der Rückwand 19 zu verhindern, sich an der Decke 17 und den Längs-Seitenwänden 4,5 abstützende Führungsrollen 22 auf. Die an den Längskonsolen aufliegenden gummibereiften Rollen 21 des Wagens sind mittels Wellen 23 an einen Antrieb mit Getriebe 24 gekuppelt, so daß die Rückwand 19 mit geringer Geschwindigkeit zur Vorderwand 11 und retour bewegbar ist.

Zur Begrenzung des Fahrweges der Rückwand 19 dienen je nach Körpergroße des Schimpansen einstellbare Endschalter 25, 26. Gegenüber den Längs-Seitenwänden 4, 5, dem Boden 9 und der Decke 17 weist die Rückwand ein seitliches Spiel 27 auf.

Um eine Verletzung des Schimpansen während des Immobilisierungsvorganges mit Sicherheit zu verhindern, kann das obere Drittel der Vorderwand 11 über ein Gelenk schräg nach hinten bewegt werden, was jedoch in der Zeichnung nicht näher dargestellt ist. Zu dem gleichen Zweck kann ein an der Vorderwand 11 angeordnetes, rechenartiges mehrzinkiges Abdräng-Gerät dienen.

Für Verhaltensstudien ist in der Rückwand eine etwa 70 x 70 cm große Sichtscheibe 28 aus Panzerglas einmontiert, hinter der entweder eine Fernsehkamera oder ein Fernsehmonitor angeordnet werden kann. Die Bildfolge am Monitor kann kontrolliert werden. Eine Kontrolle der Bildfolge oder der angebotenen Bilder erfolgt außerhalb der infektiösen Zone aus einem Kontrollraum.

Sämtliche aus Beton gefertigten Wände sind innenseitig völlig geglättet, so daß eine Beschädigung durch den Schimpansen nicht möglich ist. Die Rückwand 19 ist von Zargen aus rostfreiem Stahl eingefaßt.

Unterhalb der Längskonsolen 8 der Längs-Seitenwände 4, 5 erstrecken sich in Längsrichtung Schraubspindeln 29, an denen ein über Muttern 30 montiertes Reinigungsschild 31 für feste Abfallstoffe und eine (nicht dargestellte) Sprühdüseneinheit zum Abspülen kleinerer Abfallteile und Exkrementen zu einer in Höhe der Vorderwand 11 des Käfigs angeordneten Rigole 32 und retour bewegbar ist. Das Reinigungsschild 31 trägtan seiner an der geneigten Fläche 3 aufliegenden Kante eine Gummilippe 33. Die Schraubspindeln 29 werden mittels eines Antriebsmotors 34, Antriebswellen35, Kupplungen und Winkelgetriebe 36 angetrieben. Endschalter sorgen für eine Wegbegrenzung des Reinigungsschildes 31.

Die Sprühdüseneinheit wird gleichzeitig mit dem Reinigungsschild 31 in Betrieb gesetzt und stellt eine wesentliche Entlastung für das Pflegepersonal dar.

Der Käfig läßt sich in verschiedener Weise ausgestalten. Beispielsweise ist es möglich, an der Rückwand eine mehrsprossige Stahlleiter aus verschweißten nahtlosen Edelstahlrohren zu montieren. Zwischen der Vorder- und Rückwand können zwei Hanfseile mittels Karabiner gespannt sein, so daß unter Zuhilfenahme eines Jutesackes eine Hängematte gebildet wird. Dadurch wird das in der Wildnis übliche Nest, welches sich Schimpansen in den Bäumen zubereiten, imitiert.

Der im dargestellten Ausführungsbeispiel gezeigte Käfig für einen Schimpansen weist eine Höhe von etwa 2,30 m, eine Länge von etwa 2,60 m und eine Breite von etwa 2 m auf.

Die Erfindung ist nicht auf das dargestellte Ausführungsbeispiel beschränkt, sondern kann in verschiedener Hinsicht modifiziert werden. Beispielsweise ist es möglich, die Rückwand entlang der Konsolen zu verschieben und beliebige andere Antriebsmechanismen für die Rückwand und für das Reinigungsschild vorzusehen.

Zur Behandlung des Schimpansen ist es von Vorteil, wenn an die von der Schiebegittertüre 12 der Vorderwand 11 verschließbare Öffnung 37 ein erkerartiger Andock-Käfig ankuppelbar ist, der ebenfalls mit einer Schiebetüre versehen ist. Nach Ankuppeln und Öffnen der beiden Schiebetüren und Vorwärtsbewegen der Rückwand wechselt das Tier in den Andock-Käfig und ist in dem relativ kleinen Andock-Käfig leichter zugänglich.

Werden mehrere erfindungsgemäße Käfigkonstruktionen nebeneinander gereiht, wobei die unbeweglichen Seitenwände 4, 5 nebeneinander zu liegen kommen, ist es möglich, die an den unmittelbar nebeneinanderliegenden Seitenwänden 4, 5 vorgesehenen Sichtscheiben 15 wegzulassen bzw. entfernbar und wiedereinsetzbar anzuordnen und hierdurch einen Groß-Käfig für mehrere Tiere zu bilden, wobei die Tiere durch die durch Weglassen der Sichtscheiben 15 gebildeten Öffnungen von einem Käfig zum anderen wechseln können.

Es ist auch möglich, zwei unmittelbar benachbarte Seitenwände 4, 5 in einem herzustellen, wobei im Falle der Herstellung aus Beton zur Erzielung der gewünschten Glätte gegebenenfalls die Innenflächen geschliffen werden müssen.

Die unbeweglichen Seitenwände, die Rückwand und die Decke können auch aus Epoxibeton gebildet sein. Weiters ist es möglich, diese Wände auch aus Mauerwerk zu bilden, beispielsweise Schalbetonsteine vorzusehen, die mit Beton ausgegossen werden. An der Innenseite einer aus Mauerwerk gebildeten Seitenwand kann eine Kunst- oder Natursteinverkleidung angebracht werden, z.B. Granit oder Marmor, wobei die Oberflächen zweckmäßig geschliffen oder poliert sind. Anstelle der Kunst- oder Natursteinverkleidung kann auch ein Nirostablechüberzug vorgesehen sein.

Unter Sichtscheiben aus Panzerglas werden gemäß der Erfindung auch Sichtscheiben aus anderen Materialien, beispielsweise aus Kunststoff, verstanden, soferne diese die erforderlichen Eigenschaften, wie insbesondere Bruchsicherheit und Widerstandsfähigkeit gegen Verformungen, aufweisen.

## Patentansprüche

1. Käfigkonstruktion für Schimpansen, mit einem aus Stäben oder Rohren gebildeten Boden (9) von rechteckigem Grundriß, den Boden umgebenden Seitenwänden (4, 5), einer Vorderwand (11), einer Rückwand (19) und einer Decke (17), wobei die Rückwand (19) gegen die Vorderwand (11) und retour bewegbar ist, dadurch gekennzeichnet, daß zur Haltung von Schimpansen in der biomedizinischen Forschung nur die Vorderwand (11) aus Stäben bzw. Rohren gebildet ist, wogegen die übrigen Seitenwände (4, 5) und die Decke (17) sowie die bewegbare Rückwand (19) aus Beton oder Mauerwerk mit innen geglätteter Oberfläche bestehen, und daß mindestens eine Seitenwand (4, 5) und die Decke (17) aus Panzerglas gebildete Sichtscheiben (15, 18, 28) aufweisen.

2. Käfigkonstruktion nach Anspruch 1, dadurch gekennzeichnet, daß die Innenfläche der Sichtscheiben (15, 18, 28) bündig mit der Innenfläche der Seitenwände (4, 5, 19) bzw. der Decke (17) ist.

3. Käfigkonstruktion nach Anspruch 1 oder 2, dadurch gekennzeichnet, daß die unbeweglichen Seitenwände (4, 5) Steher (6) aufweisen, die sich am Fundament (2) abstützen und in einem vorbestimmten Abstand (7) vom Fundament (2) den Boden (9) abstützende Längskonsolen (8) besitzen, die Führungsschienen für die Rückwand (19) bilden.

4. Käfigkonstruktion nach Anspruch 3, dadurch gekennzeichnet, daß die Steher (6) und Längskonsolen (8) einstückig mit den Seitenwänden (4, 5) ausgebildet sind.

5. Käfigkonstruktion nach Anspruch 3 oder 4, dadurch gekennzeichnet, daß die Rückwand (19) mittels Rollen oder Räder (21) auf den Längskonsolen (8) gelagert ist.

6. Käfigkonstruktion nach Anspruchs 5, dadurch gekennzeichnet, daß die Rollen bzw. Räder (21) angetrieben sind, wobei der Antriebsmechanismus (23, 24) außenseitig der Rückwand (19) angeordnet ist.

7. Käfigkonstruktion nach einem oder mehreren der Ansprüche 1 bis 6, dadurch gekennzeichnet, daß die lichte Höhe des Käfigs etwa der zweifachen Körperlänge eines Primaten, insbesondere Schimpansen, und die Grundfläche des Käfigs etwa dem Quadrat der zweifachen Körperlänge entspricht.

8. Käfigkonstruktion nach einem oder mehreren der Ansprüche 1 bis 7, dadurch gekennzeichnet, daß die Sichtscheibe (18) der Decke (17) etwa mittig angeordnet ist und ihre Fläche etwa 1/5 der Fläche der Decke (17) beträgt.

9. Käfigkonstruktion nach einem oder mehreren der Ansprüche 1 bis 8, dadurch gekennzeichnet, daß die Sichtscheibe (15) der Seitenwand (4, 5) außermittig und oberhalb der Sitzhöhe eines Primaten angeordnet ist.

10. Käfigkonstruktion nach einem oder mehreren der Ansprüche 1 bis 9, dadurch gekennzeichnet, daß die Fläche der Sichtscheiben (15, 28) 1/15 bis 1/10 der jeweiligen Seitenwände (4, 5, 19) beträgt.

11. Käfigkonstruktion nach einem oder mehreren der Ansprüche 3 bis 8, dadurch gekennzeichnet, daß unterhalb der Längskonsolen (8) eine längs des Bodens (9) bewegbare Reinigungsvorrichtung (29 bis 36) zur Reinigung des Fundamentes (2) angeordnet ist.

12. Käfigkonstruktion nach Anspruch 11, dadurch gekennzeichnet, daß die Reinigungsvorrichtung (29 bis 36) ein sich quer über die Grundfläche des Käfigs erstreckendes, am Fundament (2) streifendes Reinigungsschild (31) aufweist, das von der Rückwand (19) bis zur vorderwand (11) und retour bewegbar ist.

13. Käfigkonstruktion nach Anspruch 12, dadurch gekennzeichnet, daß das Reinigungsschild (31) an zwei entlang unterhalb der Längskonsolen (8) und im Abstand vom Fundament (2) angeordneten Schraubspindeln (29) geführten Muttern (30) gelenkig befestigt ist.

14. Käfigkonstruktion nach einem oder mehreren der Ansprüche 1 bis 13, dadurch gekennzeichnet, daß in der Rückwand (19) eine nur von außen ver- und entriegelbare Türe angeordnet ist.

15. Käfigkonstruktion nach einem oder mehreren der Ansprüche 1 bis 14, dadurch gekennzeichnet, daß an eine an der Vorderwand (11) angeordnete, durch eine Schiebetüre (12) verschließbare Öffnung (37) ein erkerartiger Käfig andockbar ist.

## Claims

1. A cage structure for chimpanzees, comprising a bottom (9) of rectangular ground plan and formed by rods or tubes, side walls (4, 5) surrounding said bottom, a front wall (11), a rear wall (19) and a ceiling (17), said rear wall (19) being movable towards and away from the front wall (11), characterized in that, for restraining chimpanzees in biomedical research, only the front wall (11) is formed by rods or tubes, whereas the remaining side walls (4, 5) and the ceiling (17) as well as the movable rear wall (19) are made of concrete or brickwork having their internal surfaces smoothed, and in that at least one side wall (4, 5) and the ceiling (17) comprise inspection panes (15, 18, 28) made of bullet-proof glass.

2. A cage structure according to claim 1, characterized in that the internal surfaces of the inspection panes (15, 18, 28) are flush with the internal surfaces of the side walls (4, 5, 19) and of the ceiling (17).

3. A cage structure according to claim 1 or 2, characterized in that the immovable side walls (4, 5) comprise standards (6) supported on the base (2) and provided with longitudinal consoles (8) at a predetermined distance (7) from said base (2), said longitudinal consoles supporting said bottom (9) and forming guide rails for the rear wall (19).

4. A cage structure according to claim 3, characterized in that the standards (6) and the longitudinal consoles (8) are designed in one piece with said side walls (4, 5).

5. A cage structure according to claim 3 or 4, characterized in that the rear wall (19) is mounted on said longitudinal consoles (8) by rollers or wheels (21).

6. A cage structure according to claim 5, characterized in that the rollers or wheels (21) are driven, the driving mechanism (23, 24) being arranged externally of said rear wall (19).

7. A cage structure according to one or several of claims 1 to 6, characterized in that the clear height of the cage approximately corresponds to twice the body length of a primate, in particular shimpanzee, and the bottom area of the cage approximately corresponds to the square of twice the body length.

8. A cage structure according to one or several of claims 1 to 7, characterized in that the inspection pane (18) of the ceiling (17) is arranged approximately in the centre, its area amounting to about 1/5 of the area of the ceiling (17).

9. A cage structure according to one or several of claims 1 to 8, characterized in that the inspection pane (15) of the side wall (4, 5) is arranged eccentrical and above the seating height of a primate.

10. A cage structure according to one or several of claims 1 to 9, characterized in that the areas of the inspection panes (15, 28) amount to about 1/15 to 1/10 of the respective side wall (4, 5, 19).

11. A cage structure according to one or several of claims 3 to 8, characterized in that a cleaning means (29 to 36) is arranged below the longitudinal console (8) for cleaning the base (2), said cleaning means being movable along the bottom (9).

12. A cage structure according to claim 11, characterized in that the cleaning means (29 to 36) comprises a scraper (31) extending transverse to the bottom surface of the cage and grazing on the base (2), said scraper being movable from the rear wall (19) to the front wall (11) and back.

13. A cage structure according to claim 12, characterized in that the scraper (31) is articulately fastened to two nuts (30) guided along threaded spindles (29) arranged below the longitudinal consoles (8) at a distance from the base (2).

14. A cage structure according to one or several of claims 1 to 13, characterized in that a door is provided in the rear wall (19), which is lockable and unlockable only from outside.

15. A cage structure according to one or several of claims 1 to 14, characterized in that an oriel-like cage structure is dockable to an opening (37) provided in the front wall (11) and closeable by a sliding door (12).

## Revendications

1. Construction de cage pour des chimpanzés comportant un fond (9) de section horizontale rectangulaire qui est constitué de barres ou de tubes, des parois latéraux (4, 5) entourant ledit fond, une paroi avant (11), une paroi arrière et un plafond (17), ladite paroi arrière étant susceptible d'être déplacée vers la paroi avant (11) et retour, caractérisée en ce que, en vue de détenir des chimpanzés en recherche biomédical, seulement la paroi avant (11) est constituée de barres ou de tubes, cependant que les parois restantes (4, 5) et le plafond (17) ainsi que la paroi arrière mobile (19) sont réalisés en béton ou en maçonnerie, ayant des surfaces intérieures lissées, et en ce qu'au moins une paroi latérale (4, 5) et le plafond (17) comprennent des vitres d'inspection (15, 18, 28) réalisées en verre à l'épreuve des projectiles.

2. Construction de cage selon la revendication 1, caractérisée en ce que les surfaces intérieures des vitres d'inspection (15, 18, 28) sont à fleur des surfaces intérieures des parois latéraux (4, 5, 19) et du plafond (17).

3. Construction de cage selon la revendication 1 ou 2, caractérisée en ce que les parois latéraux immobiles (4, 5) comportent des piliers (6) supportés sur le fondement (2) et comprenant des consoles longitudinaux (8) à une distance prédeterminée (7) du fondement, lesdites consoles supportant le fond (9) et constituant des glissières de guidage pour la paroi arrière (19).

4. Construction de cage selon la revendication 3, caractérisée en ce que les piliers (6) et les consoles longitudinaux (8) sont configurés en une seule pièce avec les parois latéraux (4, 5).

5. Construction de cage selon la revendication 3 ou 4, caractérisée en ce que la paroi arrière (19) est montée sur les consoles longitudinaux (8) par l'intermédiaire de rouleaux ou des roues (21).

6. Construction de cage selon la revendication 5, caractérisée en ce que les rouleaux ou les roues (21) sont entraînés, le dispositif d'entraînement (23, 24) étant disposé extérieur à la paroi arrière (19).

7. Construction de cage selon une ou plusieurs des revendications 1 à 6, caractérisée en ce que l'hauteur à l'intérieur de la cage correspond à peu près à la double de la longueur de corps d'un primate, notamment d'un chimpanzé, et la surface de base de la cage correspond à peu près au carré de la double de la longueur de corps.

8. Construction de cage selon une ou plusieurs des revendications 1 à 7, caractérisée en ce que la vitre d'inspection (18) du plafond (17) est disposée environ au centre, la surface de ladite vitre étant 1/5 environ de la surface du plafond (17).

9. Construction de cage selon une ou plusieurs des revendications 1 à 8, caractérisée en ce que la vitre d'inspection (15) de la paroi latérale (4, 5) est disposée excentrique et au-dessus de l'hauteur assise d'un primate.

10. Construction de cage selon une ou plusieurs des revendications 1 à 9, caractérisée en ce que la surface des vitres d'inspection (15, 28) fait 1/15 à 1/10 de la paroi latérale correspondante (4, 5, 19).

11. Construction de cage selon une ou plusieurs des revendications 3 à 8, caractérisée en ce qu'un moyen de nettoyage (29 à 36) est disposé au-dessous des consoles lontigudinaux (8) pour nettoyer le fondement (2), ledit moyen de nettoyage étant susceptible d'être déplacé le long du fond (9).

12. Construction de cage selon la revendication 11, caractérisée en ce que le moyen de nettoyage (29 à 36) comprend une raclette de nettoyage (31) s'étendant à travers la surface de base de la cage et raclant sur le fondement (2), ladite raclette étant susceptible d'être déplacée de la paroi arrière (19) à la paroi avant (11) et retour.

13. Construction de cage selon la revendication 12, caractérisée en ce que la raclette de nettoyage (31) est articulée à deux écrous (30) guidées le long de broches filétées (29) qui sont disposées au-dessous des consoles longitudinaux (8) et à une distance du fondement (2).

14. Construction de cage selon une ou plusieurs des revendications 1 à 13, caractérisée en ce qu'une porte est diposée dans la paroi arrière (19), laquelle porte peut être bloquée et débloquée seulement de dehors.

15. Construction de cage selon une ou plusieurs des revendications 1 à 14, caractérisée en ce que une cage en forme d'oriel peut être dockée à une ouverture (37) prévue dans la paroi avant (11) et susceptible d'être fermée par une porte glissante (12).
